# EUROPEAN PATENT APPLICATION

(11) **EP 2 816 306 A1**
(43) Date of publication of application: **24.12.2014**
(21) Application number: 14172728.9
(22) Date of filing: 17.06.2014
(51) Int. Cl.: F26B 9/06, A01F 25/08, F26B 21/00, F26B 21/02

(54) **Ventilation system for agriculture and garden products**

(30) Priority: 18.06.2013 SE 1350739
(71) Applicant: Nilsson, Johan, 624 30 Slite (SE)
(72) Inventor: Nilsson, Johan, 624 30 Slite (SE)
(74) Representative: Groth & Co. KB

(57) **Abstract**

A ventilation system for treatment of agriculture and garden products inside a closed storage premises (7) having a floor (3), walls (4) and a ceiling (5), which ventilation system comprises an air mixing unit (7) equipped with a fresh air intake (8) and an air circulation intake (9) and a mixture lid (21), which in dependence of its extent of opening mixes fresh air with circulation air inside the mixing unit (7), whereby a fan (11), the low side of which is connected to the air mixing unit (7) and the pressure side of which is connected to a distribution channel (43), is arranged to distribute air from the air mixing unit (7) to the storage premises (1), whereby the air mixing unit (7) is arranged at or close to the floor level close to an external wall (4) and an exhaust air outlet (10) for the circulation air is arranged in the said external wall (4) at a maximum distance from the air mixing unit (7), which distance corresponds to the largest width or height of the air mixing unit (7).

## Description

### Technical field

The present invention refers to ventilation systems arranged for obtaining advantageous storing conditions for agriculture and garden products like for instance potatoes, carrots, beetroots, other root-crops, cabbage, onion, etc.

### The background of the invention

For instance for storing of potatoes of high quality an equipment is required which carefully controls the climate within the storage premises. The quality of the product stored will never be higher during the storage, but it may rapidly decrees if the storage is made in a wrong way. Improper conditions can cause a number of different problems like rot, disease spread, taste amendment, dehydration, sprout, etc.

The market demands on cultivators, e.g. of potatoes, are constantly rising. The result is that the quality classification of potatoes has been still stronger. If the product is declassified naturally the price will go down. To avoid it the demands on the storing has increased in the last couple of years.

The background of the invention is obvious from the European patent EP 0 572 062. This publication shows a device to take care of agriculture and garden products inside a store in the form of storage premises. The device comprises a fan system, partly re-circulating the air inside the storage premises, partly adding fresh air from air intakes at the lower part of the storage premises and disposing used air from the top part of the storage premises. Other known devices have a similar function, but among other things with the difference that the air change in the storage premises is made such that fresh air is supplied from air intakes at the top part of the storage premises and used air is disposed from the lower part of the storage premises.

Vent systems of this type are often characterized as "high aired systems" or "climate controlled systems". Common to these systems is that they work with very strong air flows. Such systems were introduced in Sweden at the beginning of the 21 th century and principally the function thereof has proved to work in principle well during the years. Such systems have been used earlier in other parts of Europe. There are two large actors on the market for high aired system, namely Tolsma Techniek and Agrovent. Earlier quite another principle was dominated in Sweden characterized as "low aired system" or "Alf Johansson system". The low aired systems suffer more and more to deliver the storage quality the market demands today. Therefore a great number of the older systems have to be replaced.

Most cultivators having invested in so called high aired systems have very likely experienced a big improvement though these systems still have some drawbacks. The rest of the cultivators still maintain their poor ventilation devices with increased risk for declassified products resulting in lowered sales price.

One problem with competing ventilation systems is that the systems often have given poor ventilation in the corners of the storage premises. Furthermore the air circulation acts in different ways depending on which mixture conditions being actual for the moment. Besides that the existing systems offer poor light blockage to daylight. All these factors contribute to an inferior storage quality of the product. A further problem with the present system is that the installation is rather complicated having control means for lids in many places of a wall of the storage premises. The present systems are also subjected to a high surrounding sound-level caused by fan arrangements and air intakes.

The problem with uneven ventilation is especially apparent when the dimensions of the storage building are not optimum. This is common as the storage is carried out at the cultivator's own farm, often in present premises being rebuilt to a storage premises. Unsuitable conditions between the length, width and height of the premises make the ventilation more difficult. It is also common that ceilings and rafters disturb the air flow.

### The purpose of the invention

The purpose of the present invention is to obtain a new type of ventilation system involving an improved storage quality and a better operation economy.

The purpose is that the ventilation system will render in a more optimal air treatment through the whole storage area at the same time as an optimum product temperature, air humidity and air temperature can be maintained for the product.

Furthermore the purpose is to present a comparatively simple installation solution for such a ventilation system and thus a cost effective installation.

### Summary of the invention

By the present invention as it is described by the independent claim, the purposes mentioned above are met with and the drawbacks mentioned have been eliminated. Suitable embodiments of the invention are objects for the dependent claims.

The ventilation system controls the storage climate for the products by primarily making use of outdoor air. By measuring the product temperature, air humidity and air temperature indoors as well as outdoors the system may make decision on suitable measures to obtain a desirable result. An air mixing unit having an effective fan mixes outdoor air with indoor air in suitable proportions depending on the present conditions. The air flow caused by the fan goes through the storage building and thus through the product boxes in a controlled manner.

The invention concerns a ventilation system for treatment of agriculture and garden products inside a closed storage premises having a floor, walls and a ceiling. The ventilation system comprises an air mixing unit equipped with a fresh air intake and an air circulation intake, a mixture lid is arranged which in dependence of its extent of opening mixes fresh air with circulation air inside the mixing unit. A fan, the low side of which is connected to the air mixing unit and the pressure side of which is connected to a distribution channel, is arranged to distribute air from the air mixing unit to the storage premises. The air mixing unit is arranged at or close to the floor level close to an external wall. Furthermore there is an exhaust air outlet for the circulation air arranged inside the said wall at a maximum distance from the air mixing unit, which distance corresponds to the largest width or height of the air mixing unit. To keep a maximum distance between the exhaust air outlet and the fresh air inlet is of great importance due to the air flow point of view as certain closeness between the inlet and the outlet among others contributes to an improved air circulation inside the storage premises. Furthermore the closeness between the openings has a great technical mounting advantage compared to previous known solutions.

At an advantageous embodiment of the ventilation system the exhaust air outlet is an integrated part of the air mixing unit. In such a way the two air spaces can be joined in the air mixing unit and this means that the making of holes in the external wall is common to the two openings.

At a further embodiment of the invention the exhaust air outlet of the air mixing unit is separated from the fresh air inlet of the air mixing unit by a separation wall. By this embodiment it is only a wall separating the air spaces inside the openings from each other in the air mixing unit, which further simplifies the construction and its assemblage. Such a closeness of the air spaces also will contribute to obtain a compact control system for those lids which have to control the flows through the air mixing unit. The closeness allows also that the difference of the air paths between the inflow and outflow air is quite small and therefore the air paths are independent of the ratio of mixture, which in turn adds to keep a homogenous circulation through the storage premises.

At a further embodiment of the invention the exhaust air outlet is arranged vertically above the fresh air intake in the air mixing unit or in the wall. This arrangement of the exhaust air outlet contributes to a compact installation at the same time as the normally colder and heavier fresh air is received below the outgoing, normally warmer and lighter exhaust air.

At further embodiments of the invention the exhaust air outlet is equipped with an outlet lid being connected to a control system in such a way that the regulation of the outlet lid and the mixture lid is made common to let out an air quantity corresponding to that supplied to the storage premises through the fresh air intake. Thus the control system is constructed to operate several lids simultaneously for a cooperation to obtain a reasonably maintained air volume in the storage premises.

At a further embodiment of the invention at least one diverging channel is connected to the distribution channel, the diverging channel being equipped with an air outlet directed into the storage premises for an air flow having a direction mainly parallel to the floor of the storage premises. Thus a horizontal air flow is obtained into the storage premises and the product boxes arranged there.

At a further embodiment of the invention there are three diverging channels connected to the distribution channel, each one being equipped with an air outlet directed into the storage premises for an air flow having a direction mainly parallel to the floor of the storage premises.

At a further embodiment of the invention a first diverging channel has an air outlet arranged in the centre of the storage premises, a second diverging channel has an air outlet arranged at a first corner of the storage premises, and a third storage channel has an air outlet arranged at a second opposite corner at the same wall as the first corner in the storage premises. This arrangement of the air outlets contributes to a preferable circulation of the air in the storage premises.

At a further embodiment of the invention a distribution device, for instance in the shape of a distributing component, is arranged between the fan and the distribution channel and the diverging channels are connected to said distribution device, whereby the distribution device distributes the main part of the air from the fan to the first diverging channel and the rest of the air is distributed to the second and the third diverging channels. Achieving a distribution device distributing the air in this way involves further advantages for the air circulated to reach all parts of the storage premises and the product boxes arranged there.

At a further embodiment of the invention about 50% of the air is distributed to the first diverging channel arranged in the centre and about 25% is distributed to each one of the second and third diverging channels, which are arranged at the two side walls. Of course, other distributions of the air may be conceivable.

At a further embodiment of the invention the air mixing unit is installed within the storage premises abutting the outside wall having through openings between the storage premises and its exterior side for the fresh air intake and the exhaust air outlet. By installing the air mixing unit in immediate abutment to the exterior wall a largest possible storage volume is left for the product units at the same time as such an installation can be made very cost effective.

At a further embodiment of the invention the through openings for the fresh air intake and the exhaust air outlet at the outside of the wall are separated from each other to prevent air overflow between the exhaust air outlet and the fresh air intake. This embodiment makes it possible to prevent that the exhaust air to have an effect on the fresh air to be introduced in the air mixing unit.

At a further embodiment of the invention the outside of each one of the through openings for the fresh air intake and the exhaust air outlet is equipped with a light and sound trap. The light and sound trap further increases the quality of the stored products and reduces the noise.

The arrangement of the air channels involves opportunities for a smoother and a more predictable ventilation/cooling of the storage as a whole. The arrangement of the boxes and the direction of the air flows may for instance be fine adjusted and in such a way optimised as the conditions always are the same. Markings on the floor facilitate the arrangement of the boxes in the same way year by year.

The invention presents following improvements compared to competing systems:
* Good ventilation of the storage as a whole, in the corners as well.
* Mainly a constant air path independent of the mixing proportion.
* High performances.
* Optimized energy consumption (frequency control + software + low air resistance).
* Simple installation. At one embodiment only a modification is required of certain available equipment by making an opening in the wall.
* Low outdoor sound level by sound absorptive, rib formed covers.
* Good light blocking by these covers as for instance potatoes are sensible to light.
* Little risk for recirculation by having the air volumes separated although being comparatively close to each other.
* Backup force for lid closing at current interruption can be a complement to the invention.
* The ventilation system according to the invention may be combined with mechanical cooling to obtain sufficient low temperature or to storage of certain types of products.

All in all these advantages primarily result in higher storage quality with respect to known ventilation systems.

Suitably the ventilation system can be completed with an exteriorly arranged ventilation house in form of a so called storm grid having vertical ribs of special type as a lamellar passage. The storm grid prevents rain and snow from being brought into the building. The storm grid prevents also that sun light passes through the lids when opened. The purpose of the ventilation house is also to separate exhaust air from the inlet air to minimize the risk of recirculation when the warm air rises. As the storm grid can be mounted on three sides of the house the area of the air passage will be larger, which also results in a slower air rate and less air flow resistance. The slower air rate results in lower exterior sound level with reduced noise.

### Short description of the drawings

Now the invention will be described more in detail with reference to the accompanying drawing figures. The drawing figures show outline diagrams only to make it easier to understand the invention.
- Fig. 1: shows in a central section the air flow at a first situation for an embodiment of the invention.
- Fig. 2: shows a second situation for the embodiment of Fig. 1.
- Fig. 3: shows a third situation for the embodiment of Fig. 1.
- Fig. 4: shows an enlarged part of Fig. 2.
- Fig. 5: shows a cross-section A-A according to Fig. 4.
- Fig. 6: shows a cross-section B-B according to Fig. 4 in the second situation.
- Fig. 7: shows a cross-section B-B according to Fig. 4 in the third situation.
- Fig. 8: shows in a view from above the air flow in the storage premises according to the invention.
- Fig. 9: shows six possible arrangements of an exhaust air outlet according to the invention seen from the outside of the storage premises.

### Description of the invention

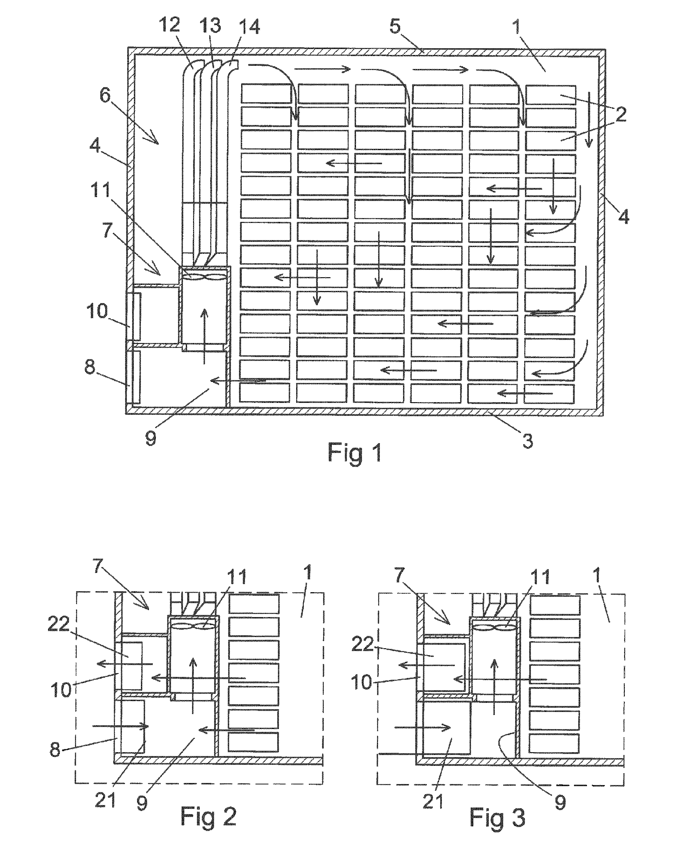

Fig. 1 shows a cross-section of a closed storage premises 1, in which product boxes 2 are arranged stacked on each other with a gap to every adjacent product box to obtain a good air circulation between the boxes. Every box is also designed to allow circulation air to pass through. The storage premises are bounded by a floor 3, walls 4 and a ceiling 5. Inside the storage premises 1 a ventilation system 6 is installed to form an air circulation within the storage premises. The ventilation system 6 includes an air mixing unit 7 equipped with a fresh air inlet 8 and a circulation air intake 9 and an exhaust air outlet 10 in the embodiment shown in the figure. Furthermore there is a fan 11 having its low side facing the air mixing unit 7 arranged to force circulation air from its compression face through one or more diverging channels 12, 13, 14 and further out in the storage premises 1 at the ceiling level as made clear by the arrows of the figure.

Fig. 1 shows the flow of the circulation air in a first situation, which means that the fresh air inlet 8 and the exhaust air outlet 10 are completely closed while the circulation inlet 9 is completely open, which involves that the fan 11 continuously circulate the air involved in the storage premises, i.e. no air exchange exists in this first situation. As is made clear of the figure there is a main air flow along the ceiling as far as to the opposite wall, where it turns downwards and flows between the product boxes back to the air mixing unit 7 and its circulation air intake 9.

Fig. 2 shows the air mixing unit 7 in a second situation, which means that a mixing lid 21 is partly opened and thereby partly closes the circulation air intake 9, which means that the fan 11 will circulate a mixture of fresh air taken from the fresh air intake 8 and circulation air taken from inside through the circulation air intake 9. By having an extra volume air added to the storage premises 1 a corresponding air volume has to be discharged from the storage premises 1 and this is made in that the exhaust air outlet 10 is opened in a corresponding degree by an outlet lid 22 to discharged a volume corresponding to the one added. Thus, in the second situation there will be a circulation of a mixture of fresh air and circulation air inside the storage premises 1.

Fig. 3 shows the air mixing unit 7 in a third situation, which means that the mixing lid 21 is completely open and thus the circulation air intake 9 is completely closed, which results in that the fan 11 circulates fresh air only through the storage premises 1. In a corresponding way the outlet lid 22 has to be open to discharge a similar large volume by the exhaust air outlet 10 as the one added.

The invention may be used in a number of ways, e.g. by manual adjustment of the lids, but the best way of regulation of the air flows through the storage premises is to have an automatic control system managing this regulation by an input making use of i. a. the temperature and the air humidity of the exterior air on one hand and of the inside air on the other hand, the product temperature, operating times etc. By programming suitable set values for the type of product actually stored at the moment in the establishment the system strives to obtain a correspondence between actual values and set values with help of a suitable control algorithm.

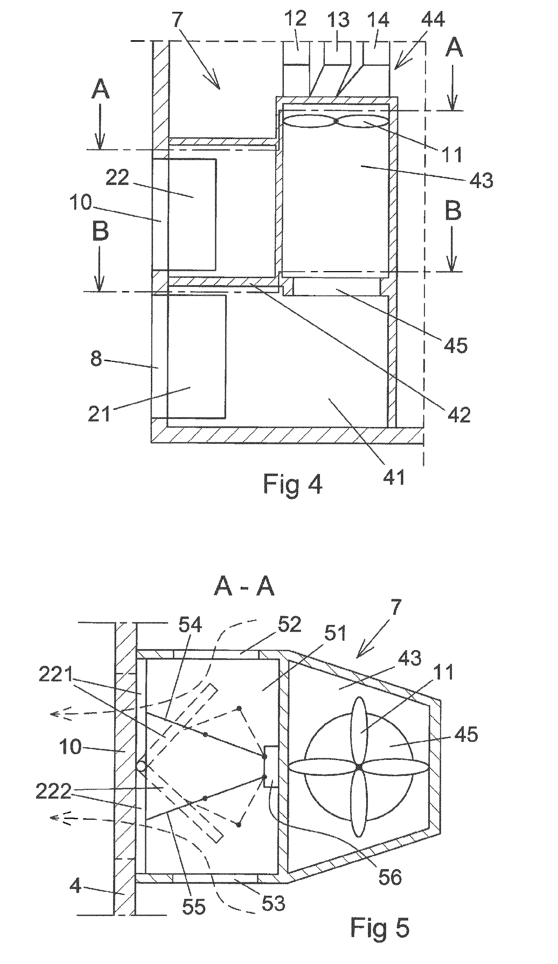

Fig. 4 shows an enlargement of the air mixing unit 7 shown in Fig. 2 with its fan 11 forcing air of a suitable mixture ratio out through the diverging channels 12, 13, 14. The mixture ratio of fresh air and circulation air is obtained in a mixture chamber 41, in which the mixture lid 21 controls the ratio for fresh air added to the mixture chamber 41 through the fresh air intake 8 and from the side of the mixture chamber 41 through the circulation air intake 9. If the fresh air intake 8 is completely closed the circulation air intake 9 is completely open and the circulation will be according to the first situation according to Fig. 1. If the mixture lid 21 of the fresh air intake 8 is opened halfway the very same mixture lid 21 will close the circulation air intake 9 halfway and the circulation will be according to the second situation according to Fig. 2. If the mixture lid 21 of the fresh air intake 8 is completely opened the very same mixture lid 21 will completely close the circulation air intake 9 and the circulation will be according to the third situation according to Fig. 3. The figure shows also the exhaust air outlet 10 regulated by the outlet lid 22. The movements of the mixture lid 21 and of the outlet lid 22 are co-ordinated to discharge an air quantity corresponding to the one added to the storage premises through the fresh air inlet. Also Fig. 4 shows that the exhaust air outlet 10 in the air mixture unit 7 is separated from the fresh air inlet 8 in the air mixture unit 7 by an intermediate wall 42. The fan 11 is arranged in a distribution channel 43, to which the diverging channels 12, 13, 14 are connected. Between the distribution channel 43 and the diverging channels 12, 13, 14 there is a distribution device 44, which distribution device separates the air flow in suitable quantities to the diverging channels 12, 13, 14. A suitable distribution can be that 50% of the air flow is distributed to the middle diverging channel 14 and 25% of the air flow is distributed to each one of the two side channels 12, 13. This distribution is illustrated in the figure by different proportions between the base surfaces of the diverging channels. The distribution device can be designed in a number of different ways, but a suitable design is that it consists of a base surface having the same number of openings as the number of diverging channels and in that respective opening diameter has soft transmissions with little air resistance determining the air flow of the channel. The figure shows also a flow path 45 between the mixture chamber 41 and the distribution channel 43. The flow path 45 is preferably designed in a way that allows largest possible flow from the mixture chamber 41 to the distribution channel 43.

An embodiment will be schematically described below for such a construction of a lid, but within the scope of the invention there are other conceivable constructions of lids regulating the air flows described, for instance separate lids may be arranged for fresh air intake and for the circulation air intake, where said lids are co-ordinated with respect to their movements to obtain a corresponding mixture ratio of the air in the mixture chamber.

Fig. 5 shows a section through the top part of the air mixture unit 7 according to section lines A-A in Fig. 4. The fan 11 is installed in the distribution channel 43 and is arranged to suck circulation air through the flow path 45. According to this embodiment there are shown two closed lids 221, 222 inside a outlet chamber 51 and shown with continuous lines, and also partly opened as is shown by dashed lines. When these outlet lids are closed there is no outlet of air from the storage premises, but all the air circulates according to the air flow in Fig. 1. When the outlet lids are partly open or completely open air is let out from the storage premises through an air flow in the outlet chamber 51 from its two sides through top chamber openings 52, 53 and further out from the outlet chamber 51 through the exhaust air outlet 10 shown by the dashed arrows in the figure. The side restrictions of the exhaust air outlet are shown as dashed cross lines in the wall 4. To operate the outlet lids there is an operation device schematically shown in the figure for each one of the outlet lids 221, 222 in form of a hinged arm 54, 55, which is driven by a hinged arm motor 56 for opening and closing of the outlet lids. The operation of the outlet lids may however be obtained in other ways within the scope of the invention. As indicated above the movements of the outlet lids are cooperated with the movement of the mixture lid.

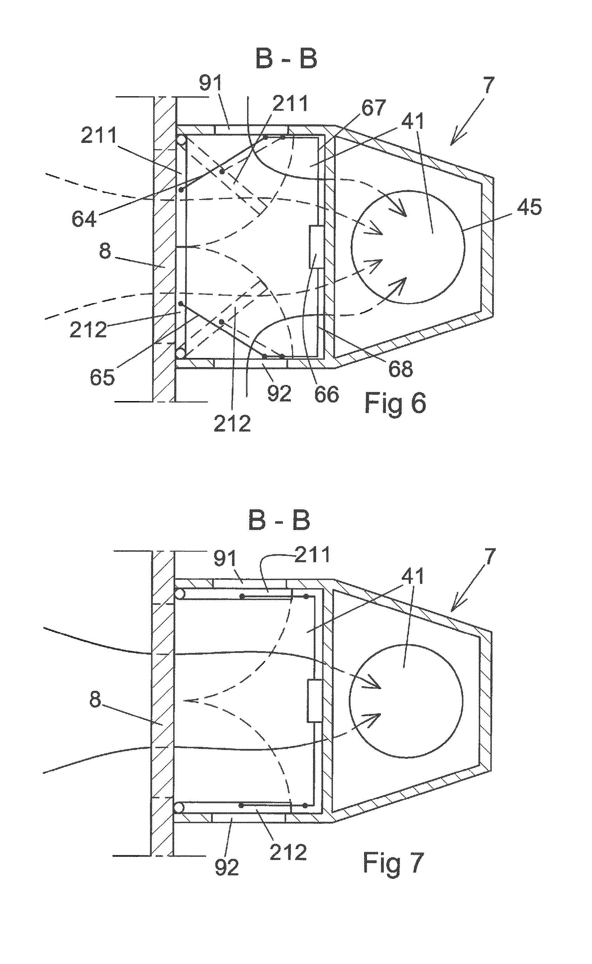

Fig. 6 shows the lower part of the air mixture unit 7 by a cross section B-B according to Fig. 4. According to this embodiment there are two closed mixture lids 211, 212, shown with continuous lines, in a mixture chamber 41 and the very same mixture lids are also shown partly opened by dashed lines. When these mixture lids are closed there is no inlet flow of fresh air to the mixture chamber 41 and the storage premises, but all the air circulates according to the air flow in Fig. 1. When the mixture lids are partly open or completely open fresh air is added to the mixture chamber 41 and the storage premises in that the fan sucks the air through the flow path 45 and further through the diverging channels. This is shown in the figure by dashed arrows. Furthermore when the mixture lids are partly open circulation air from the storage premises will be added to the mixture chamber 41 through the two circulation air inlets 91, 92, which is shown by the continuous arrows, and is mixed up with the added fresh air through the fresh air intake 8 to be forced into the storage premises with aid of the fan. In a corresponding way as the one shown in Fig. 5 the regulation of the mixture lids 211, 212 is made by an operation device for each one of the mixture lids in form of a hinged arm 64, 65, which is driven by a hinged arm motor 66 through two rotating axes 67, 68, which rotate end links of the rotating axes in upwards and downwards direction respectively for opening and closing of the mixture lids. As mentioned above the movements of the mixture lids are synchronized with the movements of the outlet lids. The air flow shown in the figure corresponds to the one previously shown by Fig. 2, i.e. the fresh air is mixed up with circulation air in a suitable ratio to be circulated in the storage premises.

Fig. 7 shows the air mixture unit 7 and the mixture chamber 41 according to the cross-section B-B at a third situation, which means that the mixture lids 211, 212 have opened the fresh air intake 8 completely and thus closed the two circulation air intakes 91, 92 to the mixture chamber 41. Thereby only fresh air will be introduced to the storage premises by the fan, whereby a corresponding volume of circulation air will be forced out through the top chamber openings 52, 53, see Fig. 5, and further out from the outlet chamber 51 through the exhaust air outlet 10 according to Fig. 5. The air flow according to this third situation is shown in a side section in Fig. 3.

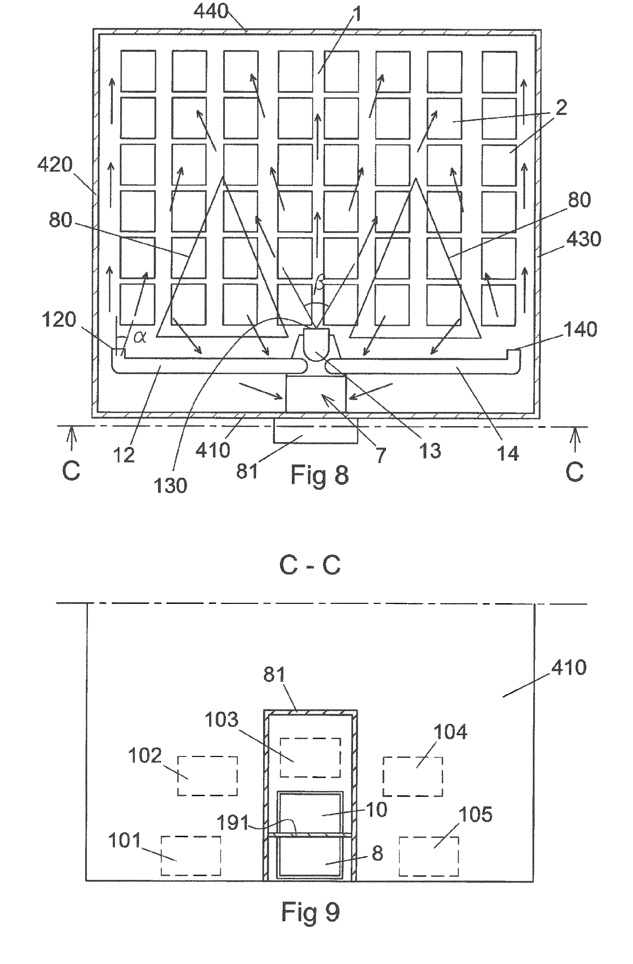

Fig. 8 shows the closed storage premises 1 in a view from above, where the product boxes 2 are arranged stacked on each other according to Fig. 1 and where the stacks are arranged in straight lines according to the figure. Between the lines and between the stacks there are air gaps, which can be of different width depending on where in the storage premises the product boxes are to be found. The gaps between the boxes are allowed to be larger and larger the further from the centre of the storage premises they are. The air mixture unit 7 with its different chambers, lids and regulation devices is arranged at the floor level abutting directly against a front wall 410, whereby the fresh air intake and the exhaust air outlet as well are arranged in the same wall 410. The three diverging channels 12, 13, 14 go from the air mixture unit 7 upwards to the ceiling level, a first side channel 12 allows circulation air to escape close to a first side wall 420 and a second side channel 14 allows circulation air to escape close to a second side wall 430. A purpose with the present invention is that the air has to be more even distributed in the outer edges of the storage premises as well. Different premises may have different optimal arrangements of the products depending on the width etc. The target is to make the "dead triangles", defined by 80 in Fig. 8, as small as possible. The two side channels can be equipped with diverging nozzles 120, 140 with a maximum distance from the respective wall within the interval 50 cm through 2.0 m, and each one being given an air diverging angle α within the interval 0 through 30 degrees from the respective side wall. This arrangement and angle diverge of the air flow is particularly favourable for those product boxes being arranged at respective side wall and at the transition from the respective side wall to the front wall 410. The arrangement of the diverging nozzles and their angle diverge may be varied in dependence on the premises to optimize the air distribution. Furthermore there is a centre channel 13 equipped with a diverging nozzle 130 arranged in the middle at ceiling level in the storage premises for a central distribution of circulation air directed to a back wall 440. This diverging nozzle 130 has a diverging angle α within the interval -30 < β < +30 degrees from a perpendicular direction to the back wall 440. As a result of this design of the diverging channels and their diverging nozzles a favourable air circulation is obtained in the storage premises, which is illustrated with the arrows in the figure. The figure also shows a protection house 81 attached to the exterior side of the front wall 410, which house in the present embodiment covers the exhaust air outlet from as well as the fresh air intake to the air mixture unit. Within the protection house the air flows from the fresh air intake and the exhaust air outlet are separated from each other by a control means, see Fig. 9, to prevent that exhaust air is sucked directly in through the fresh air intake. Furthermore the protection house is designed to protect the fresh air intake and the exhaust air outlet from rain, snow and wind and to protect the fresh air intake and the exhaust air outlet from light. All those protection functions of the protection house contribute to eliminating fast variations of air pressure, air temperature and air humidity. In one embodiment only the exhaust air outlet is protected by a house. Preferably the house or a part thereof is equipped with vertically going grids overlapping each other to form a labyrinth passage through the house.

According to Fig. 8 the fresh air above the boxes with the products is "thrown" against the opposite wall, where it turns downwards and is forced back between the boxes towards the mixture unit. As the mixture unit has its inlets for the air channels arranged at the sides and close to the front wall, better conditions are obtained for a more even flow in all the boxes lines. According to the figure the side channels form extra air channels, each one may be designed as a flexible hose transporting air out to the front corners of the storage premises, which traditionally are the corners to be most difficult to ventilate. These corners are especially complicated when the building lacks optimal dimensions, i.e. the building is not constructed with the aim of an optimal storage premises and an optimal air circulation.

Fig. 9 shows a cross-section C-C according to Fig. 8, where the house 81 covers the fresh air intake 8 and the exhaust air outlet 10 as well. In the embodiment shown these lead-through openings in the front wall 410 are arranged in a direct connection with each other but separated by the regulation means 191. Alternatives to the embodiment shown are indicated by dashed lines and concern the location of one or more the exhaust air outlets. These dashed boxes indicate that an exhaust air outlet 101, 102, 103, 104, 105 for the circulation air is arranged in the wall at a maximal distance from the air mixing unit, which distance corresponds to the largest width or largest height of the air mixing unit. In the figure the maximum distance from the air mixing unit corresponds to its maximum width, which corresponds to the length side of the fresh air intake 8. If the exhaust air outlet 10 is moved in a new embodiment, the maximum distance will be defined by the distance of said length side from the fresh air intake, which in such a case will define the air mixing unit. The figure indicates the possibility to provide embodiments within the scope of the invention where the fresh air intake 8 and the exhaust air outlet 101, 102, 103, 104, 105 are enough close to each other to obtain installation advantages, however still being separated to eliminate air overflow between the exhaust air outlet and the fresh air intake.

## Claims

1. A ventilation system for treatment of agriculture and garden products inside a closed storage premises (1) having a floor (3), walls (4) and a ceiling (5), which ventilation system comprises an air mixing unit (7) equipped with a fresh air intake (8) and an air circulation intake (9) and a mixture lid (21), which in dependence of its extent of opening mixes fresh air with circulation air inside the mixing unit (7), whereby a fan (11), the low side of which is connected to the air mixing unit (7) and the pressure side of which is connected to a distribution channel (43), is arranged to distribute air at the ceiling level from the air mixing unit (7) to the storage premises (1), **characterized in that** the air mixing unit (7) is arranged at the floor level close to an external wall (4) and **in that** an exhaust air outlet (10) for the circulation air is arranged in the said external wall (4) at a maximum distance corresponding to the largest width or largest height of the mixing unit (7) from the air mixing unit (7).

2. A ventilation system according to claim 1, **characterized in that** the exhaust air outlet (10) is an integrated part of the air mixing unit (7).

3. A ventilation system according to claim 2, **characterized in that** the exhaust air outlet (10) of the air mixing unit (7) is separated from the fresh air inlet (8) of the air mixing unit (7) by a separation wall (42).

4. A ventilation system according to anyone of claims 1 through 3, **characterized in that** the exhaust air outlet (10) is arranged vertically above the fresh air intake (8) in the air mixing unit (7) or in the wall (4).

5. A ventilation system according to anyone of claims 1 through 4, **characterized in that** the exhaust air outlet (10) is equipped with an outlet lid (22) being connected to a control system (54, 55, 56) in such a way that the regulation of the outlet lid (22) and the mixture lid (21) is made common to let out an air quantity corresponding to that supplied to the storage premises (1) through the fresh air intake (8).

6. A ventilation system according to anyone of claims 1 through 5, **characterized in that** at least one diverging channel (12, 13, 14) is connected to the distribution channel (43), the diverging channel (12, 13, 14) being equipped with an air outlet (120, 130, 140) directed into the storage premises (1) for an air flow having a direction mainly parallel to the floor (3) of the storage premises (1).

7. A ventilation system according to claim 6, **characterized in that** three diverging channels (12, 13, 14) are connected to the distribution channel (43), each one equipped with an air outlet (120, 130, 140) directed into the storage premises (1) for an air flow having a direction mainly parallel to the floor (3) of the storage premises (1).

8. A ventilation system according to claim 7, **characterized in that** a first diverging channel (13) has an air outlet (130) arranged in the centre of the storage premises, a second diverging channel (14) has an air outlet (120) arranged at a first corner of the storage premises (1), and a third storage channel (14) has an air outlet (140) arranged at a second opposite corner at the same wall (410) as the first corner in the storage premises (1).

9. A ventilation system according to claim 8, **characterized in that** a distribution device (44) is arranged between the fan (11) and the diverging channels (12, 13, 14) and the diverging channels are connected to said distribution device (44), whereby the distribution device (44) distributes the main part of the air from the fan (11) to the first diverging channel (13) and the rest of the air is distributed to the second and the third diverging channels (12, 14).

10. A ventilation system according to claim 9, **characterized in that** about 50% of the air is distributed to the first diverging channel (13) and about 25% is distributed to each one of the second and third diverging channels (12, 14).

11. A ventilation system according to anyone of claims 1 through 10, **characterized in that** the air mixing unit (7) is installed within the storage premises (1) abutting the outside wall (410) having through openings between the storage premises (1) and its exterior side for the fresh air intake (8) and the exhaust air outlet (10).

12. A ventilation system according to claim 11, **characterized in that** the through openings for the fresh air intake (8) and the exhaust air outlet (10) at the outside of the wall (410) are separated from each other to prevent air overflow between the exhaust air outlet (10) and the fresh air intake (8).

13. A ventilation system according to anyone of claims 11 through 12, **characterized in that** the outside of each one of the through openings for the fresh air intake (8) and the exhaust air outlet (10) is equipped with a light and sound trap.

14. A ventilation system according to anyone of claims 1 through 13, **characterized in that** the air mixing unit (7) is equipped with two circulation air intakes (91, 92) arranged at each side of the air mixing unit (7).
